# FASCICULE DE BREVET EUROPEEN

(11) **EP 0 605 272 B1**
(45) Date de publication et mention de la délivrance du brevet: **02.05.1997**
(21) Numéro de dépôt: 93402955.4
(22) Date de dépôt: 07.12.1993
(51) Int. Cl.: F16L 55/10, F16K 17/36, D06F 39/08

(54) **Dispositif de sécurité pour tuyaux à circulation de liquide, notamment pour tuyaux de vidange de machines à laver**
Sicherheitsvorrichtung für Rohre mit Flüssigkeitsumlauf, insbesondere für Entleerungsrohre von Waschmaschinen
Safety device for pipes with a liquid circulation, especially for drain pipes of washing machines

(30) Priorité: 22.12.1992 FR 9215482
(43) Date de publication de la demande: 06.07.1994
(73) Titulaire: COMPAGNIE INDUSTRIELLE D'APPAREILS MENAGERS (CIAPEM S.A.), 69007 Lyon (FR)
(72) Inventeur: D'Ambrosio, Patrick THOMSON-CSF S.C.P.I., F-94117 Arcueil Cedex (FR); Rabin, Marc-Antoine THOMSON-CSF S.C.P.I., F-94117 Arcueil Cedex (FR)
(74) Mandataire: Benoit, Monique

(56) Documents cités:
- DE-A- 2 606 656
- FR-A- 544 427
- FR-A- 1 252 662
- GB-A- 2 137 313
- US-A- 5 025 827
- PATENT ABSTRACTS OF JAPAN vol. 10, no. 155 (M-485)(2211) 4 Juin 1986 & JP-A-61 010 177 (TOA NENRYO KOGYO K.K.)

## Description

L'invention concerne un dispositif de sécurité pour tuyaux destinés à l'écoulement de fluides, notamment pour tuyaux d'évacuation d'eau de vidange de machines à laver la vaisselle ou le linge.

Le transport d'eau ou d'un autre liquide peut poser des problèmes de sécurité et de détérioration de l'environnement des moyens de transport lorsque le liquide s'écoule en dehors des frontières prévues.

Un brevet français n° 544 427, qui est l'état de la technique le plus proche, et une demande de brevet allemand n° 2 606 656 décrivent des systèmes d'obstruction pour conduites de fluides.

Dans le cas de machines à laver le linge ou la vaisselle, ces problèmes se traduisent par une possibilité d'inondation pouvant conduire à des courts-circuits ou à la détérioration du sol, pour ne citer que quelques exemples. Divers dispositifs existent pour détecter et éventuellement empêcher un écoulement intempestif de liquide. Certaines solutions prévoient, dans le socle de la machine, des détecteurs réagissant à une arrivée de liquide. Ces détecteurs sont, par exemple, des flotteurs ou des éponges compressées se gonflant au contact du liquide. Lesdits détecteurs actionnent des contacts reliés aux dispositifs de commande de la machine. Lorsqu'une anomalie est détectée, la machine réagit en activant une alarme, en coupant l'alimentation d'eau ou en effectuant une autre action. Ce système a le désavantage de ne détecter que les fuites prenant naissance à l'intérieur de la machine et non celles pour lesquelles le liquide se déverse à l'extérieur. Pour ce cas, on prévoit un dispositif périphérique disposé à quelque distance de la machine, relié à celle ci par l'intermédiaire d'un câble. Les désavantages des dispositifs de ce genre sont principalement leur complexité et leur prix. De plus, des mesures prophylactiques ne sont pas possibles avec une telle structure, car une fuite n'est détectée que lorsqu'elle a déjà eu lieu. D'autre part, le dispositif périphérique n'est pas forcément placé à un point de passage du liquide sur le sol.

Les systèmes de sécurité décrits ci-haut ne permettent pas d'éviter à coup sûr une inondation lorsque le tuyau de vidange de la machine à laver se décroche de la conduite d'accès au réseau d'évacuation des eaux usées. Dans ce cas, lorsque le raccord entre le tuyau de vidange et la machine est plus bas que le niveau de l'eau dans dans la cuve, celle-ci peut s'échapper sous l'effet de la gravité ou encore sous l'effet de la pompe de vidange. Lorsque ce point de raccordement est au-dessus du niveau du liquide, celui-ci peut s'échapper par siphonnage ou, comme précédemment, lorsque la pompe de vidange fonctionne. L'inondation peut alors avoir lieu à une distance appréciable de la machine, selon la longueur du tuyau de vidange. Une détection efficace par les moyens connus semble alors hasardeuse, sinon impossible.

De plus, si la machine à laver le linge ou la vaisselle est munie d'un dispositif automatique de maintien du niveau d'eau, celle-ci se déverse en continu sur le sol.

La présente invention a pour but de proposer un dispositif de sécurité, efficace et simple pour tuyau de vidange, ou plus généralement pour tout tuyau d'écoulement de fluides, qui permet de prévenir un écoulement intempestif du fluide, notamment en cas de décrochage de l'extrémité dudit tuyau du raccord vers lequel est envoyé le fluide.

Un autre but est de proposer un tel dispositif de sécurité pouvant être installé facilement sur des tuyaux existants non équipés, par exemple sous forme de kit vendu séparément.

Un autre but de l'invention est de proposer un dispositif de sécurité réutilisable pratiquement indéfiniment.

La présente invention a pour objet un dispositif tel que défini par les revendications 1, et 2.

Par position d'une partie de tuyau, on entend, dans la présente invention, soit l'emplacement, soit l'orientation, soit ces deux caractéristiques à la fois. De même, les expressions "moyens de blocage" et "moyens d'obturation" seront utilisées de manière synonyme.

Ces deux moyens combinés font partie du dispositif de sécurité selon l'invention. Ledit dispositif peut faire partie à titre originaire d'un tuyau ou d'une conduite ou être monté sur un tuyau ou une conduite existante.

Le moyen de détection a pour rôle de détecter au moins une position non désirable d'une partie dudit tuyau. Cette position peut se définir, par exemple, par une inclinaison maximale de l'axe d'une section de tuyau, ou par une hauteur minimale d'une telle section. Il est alors possible de définir un état de repos dudit moyen, correspondant à un fonctionnement en deçà de la limite, et un état d'actionnement correspondant à un fonctionnement au-delà de cette limite. Avantageusement, le moyen de détection est au repos lorsque l'extrémité du tuyau par lequel va sortir le liquide est inclinée par exemple de moins de 90° par rapport à la verticale et entre en action au-delà.

Le moyen d'obturation a pour fonction de bloquer toute circulation de liquide dans le tuyau afin d'éviter l'écoulement dudit liquide lorsque ledit tuyau est dans une position non désirée, par exemple lorsqu'une de ses extrémités est tombée à terre.

D'autres caractéristiques et avantages de l'invention apparaîtront à travers la description de modes de réalisation particuliers de la présente invention, pris à titre d'exemples non limitatifs et schématiquement illustrés par les figures jointes, parmi lesquelles
la figure 1 représente un exemple de réalisation de l'invention, le dispositif de sécurité étant adapté directement sur la crosse de vidange du tuyau, le dispositif étant au repos,
la figure 2 représente le même exemple de réalisation du dispositif de sécurité lorsque ledit dispositif est actionné.

Pour simplifier l'exposé de l'invention, celle-ci sera décrite dans son application au circuit de vidange d'une machine à laver le linge ou la vaisselle. L'adaptation de l'invention à d'autres applications est du ressort de l'homme du métier utilisant ses connaissances ordinaires.

Une machine à laver le linge ou une machine à laver la vaisselle comprend habituellement une cuve intérieure étanche dans laquelle l'eau de lavage ou de rinçage est mise en contact avec les objets à nettoyer. Périodiquement, l'eau usée, chargée de détergents et de détritus, doit être évacuée hors de la cuve. Cette évacuation est effectuée par l'intermédiaire d'une pompe de vidange reliée à un tuyau de vidange. Ce dernier est généralement raccordé à un point bas par rapport au fond de la cuve à l'arrière de la machine, puis passe par un point haut par rapport au niveau d'eau normal de la cuve, ceci dans le but d'éviter un écoulement d'eau intempestif par gravité. Souvent, l'extrémité du tuyau est munie d'une crosse de vidange destinée à faciliter l'accrochage dudit tuyau au rebord d'un lavabo ou d'une conduite d'évacuation.

Dans l'exemple de réalisation de l'invention présenté par les dispositifs de sécurité est monté directement sur la crosse de vidange. Il est bien évident que l'exemple de réalisation peut facilement être adapté à un tuyau relié à une conduite d'évacuation par un autre moyen qu'une crosse de vidange, en intercalant entre cet autre moyen et le tuyau un dispositif tout à fait similaire.

Selon cet exemple de réalisation, le dispositif de sécurité comprend une section cylindrique 17 s'adaptant hermétiquement au tuyau 18. La section cylindrique 17 se poursuit par une section également cylindrique 19 d'où naît la crosse 16. Le raccord entre les deux sections cylindriques 17 et 18 constitue un épaulement 20 formant avec un piston 21 muni d'un joint d'étanchéité 22 une fermeture hermétique lorsque le dispositif de sécurité est déclenché.

Au niveau dudit épaulement, le tube est muni d'une collerette radiale 37, dont le rôle est le même que celui de la collerette 4 de l'exemple. La tige du piston 21 est maintenue, au repos, dans un logement 23 en forme d'éprouvette et est munie d'un doigt de réarmement 24, accessible à l'utilisateur par une fente longitudinale pratiquée dans le logement 23. Un ressort à compression 25 prend appui sur ledit doigt de réarmement 24 et sur le fond fermé du logement 23. Lorsque le dispositif est en position de repos, c'est à dire lorsque le liquide issu du tuyau 18 doit s'écouler librement, le ressort 25 est comprimé, le doigt de réarmement 24 étant maintenu en position armée par le cran 26, dont le pêne pénètre à l'intérieur du logement 23 par une ouverture pratiquée en face de la fente d'accès dudit doigt 24. Le cran 26 peut être dégagé par une gâchette 27 qui remet automatiquement ledit cran 26 en position de blocage lorsque aucune contrainte n'est exercée sur elle par le moyen de détection. Ceci est effectué par exemple par l'intermédiaire d'une lamelle élastique 28, fixée sur ladite gâchette et prenant appui sur une butée 29. Le moyen de détection comprend par exemple une bille 31 contenue dans un tube 30, fixé de manière connue au logement 23 et/ou à une autre partie du dispositif de sécurité. Le levier de la gâchette 27 est positionné au-dessus de l'embouchure du tube 30, de façon à ce que la bille puisse actionner ledit levier, sans toutefois avoir la possibilité de s'échapper du tube 30. L'axe dudit tube est sensiblement parallèle à l'axe des sections cylindriques 17 et 19.

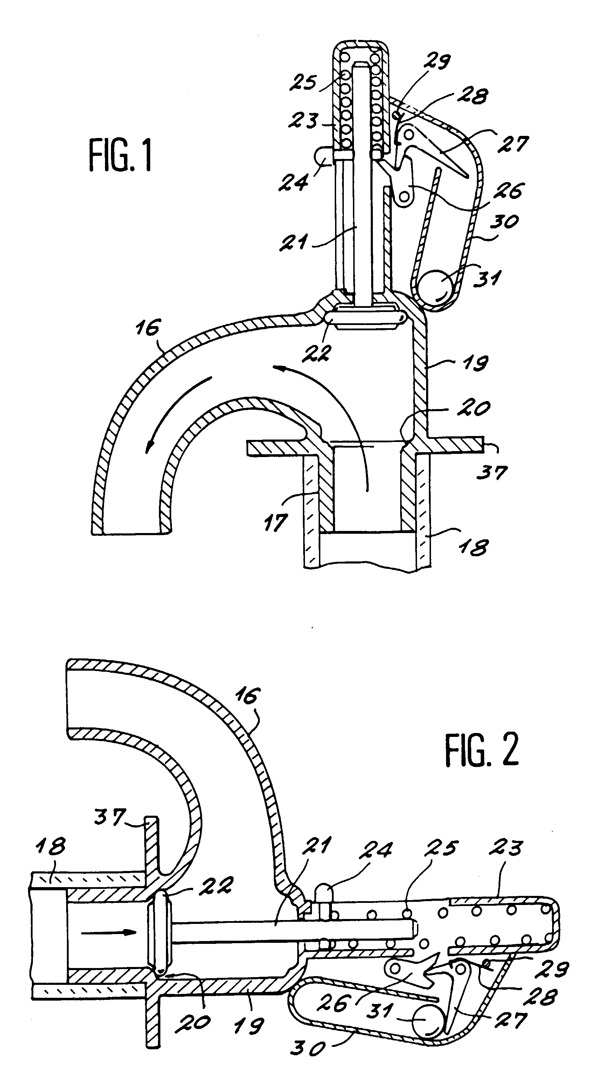

En position de repos, lorsque la crosse de vidange 16 est correctement reliée au réseau d'évacuation, le dispositif de sécurité est en position verticale. Cette position est représentée à la figure 1. Le doigt de réarmement 24 est maintenu par le pêne du cran 26. Le dispositif de sécurité étant armé, la tige du piston 21 est entièrement logée dans le logement 23, la tête du piston, munie du joint 22 étant plaquée contre l'embouchure supérieure de la section cylindrique 19. Avantageusement, cette embouchure est d'un diamètre légèrement supérieur à celui de la tige du piston 21. De même, avantageusement, ladite section 19 se rétrécit au-dessus du raccord avec la crosse en soi 16, dans le but de former avec la tête du piston 21 et le joint 22 un bouchon hermétique lorsque le dispositif est en position de repos. Dans cette position de repos, la bille 31 se trouve au fond du tube 30.

La figure 2 illustre le dispositif lorsque après un décrochage de la crosse, le dispositif de sécurité s'est déclenché. En effet, lorsque le dispositif de sécurité tombe, la collerette 37 a pour effet d'incliner l'axe des sections cylindriques 17 et 19 de plus de 90 degrés par rapport à la verticale. Le tube 30 s'inclinera lui aussi, la bille 31 sera projetée vers l'embouchure dudit tube et sur le levier de la gâchette 27. Celle-ci agira sur le cran 26, dont le pêne libérera le doigt de réarmement 24. Le ressort de compression 25 se détendra alors, forçant la tête du piston 21 et le joint 22 à venir se plaquer contre l'épaulement 20, de façon à obturer hermétiquement la section cylindrique 17. Le tuyau 18 sera alors efficacement obturé.

Pour permettre à nouveau la circulation du liquide, il suffira de réarmer le dispositif en agissant sur le doigt de réarmement 24.

Selon une variante de réalisation non représentée, le moyen obturateur est un volet circulaire dont le diamètre est égal au diamètre intérieur de la section cylindrique 17, ladite section étant dans cet exemple de même diamètre que la section cylindrique 19, le raccord entre ces deux sections ne présentant donc pas d'épaulement. Ledit volet est muni d'un axe passant par l'un de ses diamètres et perpendiculaire à l'axe de la section cylindrique 17. Au moins une extrémité dudit axe du volet traverse par exemple la paroi de la section cylindrique 17. La rotation de cet axe est commandée par un ressort de torsion installé de façon à ce qu'en position de repos du dispositif, le ressort est remonté et le volet présente uniquement sa tranche au liquide venant du tuyau. Le ressort est retenu par un dispositif à gâchette et à réarmement manuel similaire à celui mentionné plus haut. Lorsque l'élément de détection réagit à un changement d'orientation de la partie du tuyau à surveiller, le ressort est relâché et fait effectuer une rotation de 90° au volet, obturant ainsi totalement le circuit de vidange. Pour permettre à nouveau une circulation de liquide, il sera nécessaire de réarmer le dispositif. Ceci se fera par exemple par l'intermédiaire d'une manette rotative de réarmement. Avantageusement, le volet est muni sur son pourtour d'un joint à lèvres. Avantageusement, la rotation du volet au-delà de 90° est bloquée par au moins un ergot fixé à l'intérieur de la section cylindrique 17.

Avantageusement, selon une variante de ce second exemple de réalisation, le moyen obturateur est non pas amené vers sa position de blocage a contre-courant du liquide lors de l'actionnement du dispositif, mais en suivant le sens de circulation dudit liquide. De cette manière, la pression du liquide dans le tuyau participera à rendre la fermeture plus étanche. On combinera alors cet avantage avec la sécurité d'un dispositif à réarmement manuel, celui-ci restant bloqué jusqu'à intervention de l'utilisateur, sans qu'il y ait de risque d'écoulement lors d'une mauvaise manipulation.

Selon une autre variante de réalisation, le moyen de détection est un poids fixé à l'une des extrémités du levier de la gâchette 27 dont l'autre extrémité est au moins partiellement libre en rotation autour d'un axe fixe par rapport à la partie du tuyau qui est à surveiller. Lorsque l'orientation de cette partie du tuyau change, la position angulaire du levier par rapport à sa position de repos change et sous l'action du poids du moyen de détection, la gâchette 27 agit sur le cran 26 dont le pêne libère le doigt de réarmement 24.

## Revendications

1. Dispositif de sécurité pour tuyaux d'écoulement de fluides, comprenant des moyens de détection (30, 31) de la position d'au moins une partie du tuyau, ces moyens agissant, lorsqu'ils détectent une position non désirée d'au moins une partie du tuyau, sur un système à ressort (23, 25) qui active des moyens d'obturation pour bloquer l'écoulement du fluide, caractérisé en ce que les moyens de détection (30, 31) agissant sur le levier d'une gachette (27) libérant le système à ressort (23, 25), la gâchette (27) agit sur un cran (26) dont le pêne libère un doigt de réarmement (24) permettant au système à ressort (23, 25) de se détendre, les moyens de détection comprenant une bille (31) contenue dans un tube (30) fixé à une autre partie du dispositif de sécurité, le levier de la gâchette (27) étant positionné au-dessus de l'embouchure du tube (30) de façon à ce que la bille (31) puisse activer le levier de la gâchette (27), la bille (31) se trouvant au fond du tube en position de repos, la bille étant projetée vers le levier de la gâchette (27) sous l'effet de l'inclinaison du tube (30).

2. Dispositif de sécurité pour tuyaux d'écoulement de fluides, comprenant des moyens de détection (30, 31) de la position d'au moins une partie du tuyau, ces moyens agissant, lorsqu'ils détectent une position non désirée d'au moins une partie du tuyau, sur un système à ressort (23, 25) qui active des moyens d'obturation pour bloquer l'écoulement du fluide, caractérisé en ce que les moyens de détection (30, 31) agissant sur le levier d'une gâchette (27) libérant le système à ressort (23, 25), la gâchette (27) agit sur un cran (26) dont le pêne libère un doigt de réarmement (24) permettant au système à ressort (23, 25) de se détendre, les moyens de détection étant constitués d'un poids fixée à une extrémité du levier de la gâchette (27), la gâchette (27) libérant le système à ressort (23, 25) sous l'action du poids lorsque la position angulaire du levier atteint une position non désirée.

3. Dispositif selon l'une quelconque des revendications précédentes, caractérisé en ce que les moyens de détection réagissent lorsqu'ils sont inclinés à 90° ou au delà par rapport à la verticale.

4. Dispositif selon l'une quelconque des revendications précédentes, caractérisé en ce que les moyens d'obturation sont constitués d'un piston (21) muni d'un joint d'étanchéité (22) formant une fermeture hermétique avec un épaulement (20).

5. Dispositif selon l'une quelconque des revendications 1 à 3, caractérisé en ce que les moyens d'obturation sont constitués d'un volet circulaire dont le diamètre est égal à la section intérieure du tuyau, le volet étant muni d'un axe passant par l'un de ses diamètres et perpendiculaire à l'axe de la section du tuyau, la rotation de l'axe du volet étant commandée par un ressort de torsion, le ressort étant retenu par la gâchette (27).

6. Dispositif selon l'une quelconque des revendications précédentes, caractérisé en ce que l'obturation du tuyau est effectuée dans le sens de circulation du liquide, la pression du liquide contribuant à maintenir le moyen d'obturation dans sa position de blocage.

7. Dispositif selon l'une quelconque des revendications précédentes, caractérisé en ce que les moyens de détection sont à l'état de repos lorsque l'extrémité du tuyau vers laquelle est évacuée le liquide est sensiblement verticale.

## Patentansprüche

1. Sicherheitsvorrichtung für Rohre zum Ablauf von Flüssigkeiten mit Mitteln (30, 31) zum Erfassen der Position wenigstens eines Teils des Rohrs, wobei diese Mittel bei Erfassung einer unerwünschten Position wenigstens eines Teils des Rohrs auf ein Federsystem (23, 25) einwirken, das Verschlußmittel zum Sperren des Flüssigkeitsablaufs aktiviert, dadurch gekennzeichnet, daß die Erfassungsmittel (30, 31) auf den Hebel eines Drückers (27) einwirken, der das Federsystem (23, 25) freigibt, wobei der Drücker (27) auf eine Raste (26) einwirkt, deren Riegel einen Rückstellfinger (24) freigibt, wodurch sich das Federsystem (23, 25) entspannen kann, wobei die Erfassungsmittel eine in einem Rohr (30), das an einem anderen Teil der Sicherheitsvorrichtung befestigt ist, enthaltene Kugel (31) aufweisen, wobei der Hebel des Drückers (27) derart über der Mündung des Rohrs (30) positioniert ist, daß die Kugel (31) den Hebel des Drükkers (27) aktivieren kann, und wobei sich die Kugel (31) in Ruhestellung am Boden des Rohrs befindet und unter der Wirkung der Neigung des Rohrs (30) gegen den Hebel des Drückers (27) geworfen wird.

2. Sicherheitsvorrichtung für Rohre zum Ablauf von Flüssigkeiten mit Mitteln (30, 31) zum Erfassen der Position wenigstens eines Teils des Rohrs, wobei diese Mittel bei Erfassung einer unerwünschten Position wenigstens eines Teils des Rohrs auf ein Federsystem (23, 25) einwirken, das Verschlußmittel zum Sperren des Flüssigkeitsablaufs aktiviert, dadurch gekennzeichnet, daß die Erfassungsmittel (30, 31) auf den Hebel eines Drückers (27) einwirken, der das Federsystem (23, 25) freigibt, wobei der Drücker (27) auf eine Raste (26) einwirkt, deren Riegel einen Rückstellfinger (24) freigibt, wodurch sich das Federsystem (23, 25) entspannen kann, wobei die Erfassungsmittel aus einem Gewicht bestehen, das an einem Ende des Hebels des Drückers (27) befestigt ist, und wobei der Drücker (27) das Federsystem (23, 25) unter der Wirkung des Gewichts freigibt, wenn die Winkelposition des Hebels eine unerwünschte Position erreicht.

3. Vorrichtung nach einem der vorhergehenden Ansprüche, dadurch gekennzeichnet, daß die Erfassungsmittel reagieren, wenn sie bezüglich der Vertikalen um 90° oder darüber hinaus geneigt sind.

4. Vorrichtung nach einem der vorhergehenden Ansprüche, dadurch gekennzeichnet, daß die Verschlußmittel aus einem Kolben (21) bestehen, der mit einem Dichtugsring (22) versehen ist, der einen hermetischen Abschluß mit einer Schulter (20) bildet.

5. Vorrichtung nach einem der Ansprüche 1 bis 3, dadurch gekennzeichnet, daß die Verschlußmitel aus einer kreisförmigen Klappe bestehen, deren Durchmesser gleich dem Innenquerschnitt des Rohrs ist, wobei die Klappe mit einer Achse versehen ist, die durch einen ihrer Durchmesser und senkrecht zu der Querschnittsachse des Rohrs verläuft, wobei die Drehung der Achse der Klappe durch eine Torsionsfeder gesteuert wird, die von dem Drücker (27) gehalten wird.

6. Vorrichtung nach einem der vorhergehenden Ansprüche, dadurch gekennzeichnet, daß das Rohr in Richtung des Flüssigkeitsumlaufs verschlossen wird, wobei der Flüssigkeitsdruck dazu beiträgt, das Verschlußmittel in seiner Sperrposition zu halten.

7. Vorrichtung nach einem der vorhergehenden Ansprüche, dadurch gekennzeichnet, daß sich die Erfassungsmittel in der Ruhestellung befinden, wenn das Ende des Rohrs, zu dem die Flüssigkeit evakuiert wird, im wesentlichen vertikal liegt.

## Claims

1. Safety device for pipes for the flow of fluids, comprising means (30, 31) for detecting the position of at least part of the pipe, these means acting, when they detect an undesired position of at least part of the pipe, on a spring-loaded system (23, 25) which activates closure means for blocking the flow of the fluid, characterized in that with the detection means (30, 31) acting on the lever of a trigger (27) releasing the spring-loaded system (23, 25), the trigger (27) acts on a catch (26), the finger of which releases a resetting pin (24) allowing the spring-loaded system (23, 25) to relax, the detection means comprising a ball (31) contained in a tube (30) fixed to some other part of the safety device, the lever of the trigger (27) being positioned above the mouth of the tube (30) so that the ball (31) can activate the lever of the trigger (27), the ball (31) lying at the bottom of the tube in the position of rest, and the ball being thrown towards the lever of the trigger (27) under the effect of the inclination of the tube (30).

2. Safety device for pipes for the flow of fluids, comprising means (30, 31) for detecting the position of at least part of the pipe, these means acting, when they detect an undesired position of at least part of the pipe, on a spring-loaded system (23, 25) which activates closure means for blocking the flow of the fluid, characterized in that with the detection means (30, 31) acting on the lever of a trigger (27) releasing the spring-loaded system (23, 25), the trigger (27) acts on a catch (26), the finger of which releases a resetting pin (24) allowing the spring-loaded system (23, 25) to relax, the detection means consisting of a weight fixed to one end of the lever of the trigger (27), the trigger (27) releasing the spring-loaded system (23, 25) under the action of the weight when the angular position of the lever reaches an undesired position.

3. Device according to either one of the preceding claims, characterized in that the detection means react when they are inclined by 90° or more to the vertical.

4. Device according to any one of the preceding claims, characterized in that the shut-off means consist of a piston (21) fitted with a seal (22) forming a hermetic closure against a shoulder (20).

5. Device according to any one of Claims 1 to 3, characterized in that the shut-off means consist of a circular flap, the diameter of which is equal to the internal cross-section of the pipe, the flap being fitted with a spindle passing through one of its diameters perpendicular to the axis of the cross-section of the pipe, the spindle of the flap being made to rotate by a torsion spring, the spring being restrained by the trigger (27).

6. Device according to any one of the preceding claims, characterized in that the pipe is shut off in the direction of circulation of the liquid, the pressure of the liquid contributing towards keeping the shut-off means in its blocking position.

7. Device according to any one of the preceding claims, characterized in that the detection means are in the state of rest when the end of the pipe towards which the liquid is discharged is substantially vertical.
